(19) Europäisches Patentamt
European Patent Office
Office européen des brevets

(11) Veröffentlichungsnummer: **0 204 348**
**B1**

(12) # EUROPÄISCHE PATENTSCHRIFT

(45) Veröffentlichungstag der Patentschrift: **19.12.90**

(21) Anmeldenummer: **86107760.0**

(22) Anmeldetag: **06.06.86**

(51) Int. Cl.[5]: **C03C 17/32**, C09J 175/00, C08G 59/18, B29C 45/14, B29K 75/00, B60J 1/00

(54) **Verfahren zum Ummanteln von Glasscheibenkanten mit einem elastischen Polyisocyanat-polyadditionsprodukt unter Verwendung eines Epoxidharz-Härtersystems als Haftvermittler.**

(30) Priorität: **07.06.85 DE 3520318**

(43) Veröffentlichungstag der Anmeldung: **10.12.86 Patentblatt 86/50**

(45) Bekanntmachung des Hinweises auf die Patenterteilung: **19.12.90 Patentblatt 90/51**

(84) Benannte Vertragsstaaten: **BE DE FR GB IT NL SE**

(56) Entgegenhaltungen:
**EP-A- 0 173 907**
**DE-A- 3 322 442**
**DE-A- 3 435 365**
**US-A- 3 872 198**
**US-A- 4 121 014**

(73) Patentinhaber: **BASF Aktiengesellschaft, Carl-Bosch-Strasse 38, D-6700 Ludwigshafen(DE)**

(72) Erfinder: **Schmidt, Hans Ulrich, Wredestrasse 53, D-6700 Ludwigshafen(DE)**
Erfinder: **Hutchison, John, Dr., Hans-Willmann-Strasse 8, D-6706 Wachenheim(DE)**
Erfinder: **Ropte, Eckhard, Dr., Woehlerstrasse 12, D-6700 Ludwigshafen(DE)**

EP 0 204 348 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Glasscheiben, mit Metalldampf beschichtete Glasscheiben und/oder mit transparenten Kunststofffolien, z.B. aus Polyester, Polyurethan u.a., belegte Sicherheitsglasscheiben werden nach moderner Technik mit dem Metallrahmen der Fahrgastzelle von Verkehrsmitteln, insbesondere von Kraftfahrzeugen, verklebt. Hierzu müssen die Glasscheiben nach dem Zuschnitt einer Kantenbearbeitung mit anschließender Reinigung unterworfen werden. Zur Verhinderung einer UV-Schädigung der zwischen Glasscheibe und Metallrahmen liegenden Haftvermittler- und Klebstoffschicht werden die planen Scheiben im Randbereich mit einem UV-Strahlung absorbierenden Farbstoff bedruckt und danach gegebenenfalls bei erhöhter Temperatur spezifisch für den Fahrzeugtyp sphärisch verformt. Derartige Verfahren sind arbeitsintensiv und daher teuer.

Ein zur Kraftübertragung befähigter elastischer Verbund zwischen Glas und lackiertem Blech, hergestellt nach diesem Prinzip, wird z.B. in der DE-A 3 322 442 beschrieben.

Nach Angaben dieser Publikation wird ein vorgefertigtes Elastomerprofil aus Kautschuk zwischen eine Glasscheibe und das lackierte Blech von Automobilen geklebt. Zur Verklebung der Glasscheibe, mit dem Kautschukelastomeren dient ein Epoxidharzklebstoff, der gegebenenfalls als Haftvermittler pyrogene Kieselsäure und γ-Glycidoxypropyl-tri-methoxysilan enthalten kann. Zur Verklebung des Verbunds aus Glasscheibe und Kautschukelastomeren mit dem lackierten Blech findet eine Klebstoffkombination aus dem vorgenannten Epoxidharzklebstoff elastomerseitig und einem Polyurethanklebstoff blechseitig Verwendung.

Ein Verfahren zum Ummanteln von Glasscheibenkanten mit elastischen Polyisocyanat-polyadditionsprodukten in einem Formwerkzeug wird in der DE-A 3 432 205 beschrieben. Nach diesem Verfahren wird die gegebenenfalls an den Kantenbereichen mit Haftvermittler beschichtete Glasscheibe in das offene Formwerkzeug eingelegt, das Formwerkzeug verschlossen, der hierbei gebildete Freiraum zwischen der Glasscheibe und dem Formwerkzeug mit einer reaktionsfähigen Mischung aus

a) organischen Polyisocyanaten,
b) höhermolekularen Verbindungen mit mindestens zwei reaktiven Wasserstoffatomen,
c) Kettenverlängerungsmitteln und/oder Vernetzern und
d) Katalysatoren sowie gegebenenfalls
e) Hilfsmitteln und/oder Zusatzstoffen beschickt und die Reaktionsmischung aushärten gelassen.

Die Herstellung der Polyurethan-, Polyurethan-Polyharnstoff- oder Polyharnstoff-Elastomeren – im folgenden abgekürzt PU-, PU-PH- und PH-Elastomere genannt – erfolgt zweckmäßigerweise nach dem one shot-Verfahren mit Hilfe der Reaktionsspritzgußtechnik (RIM).

In der genannten Patentanmeldung beschrieben wird auch die Verwendung eines oder mehrerer Haftvermittler zur Erzielung eines gut haftenden Verbunds zwischen der Glasscheibe und dem PU-, PU-PH- oder PH-Elastomeren. Als geeignete Haftvermittler genannt werden beispielsweise gegebenenfalls modifizierte organische Polyisocyanate, polyfunktionelle Epoxidverbindungen und polyfunktionelle Silanverbindungen, vorzugsweise Aminoalkyltrialkoxysilane.

Nach diesem Verfahren können je nach Kraftfahrzeugtyp zugeschnittene und gegebenenfalls sphärisch verformte Glasscheiben, insbesondere planare Seitenscheiben, bei Verwendung von vorzugsweise hochreaktiven one shot-PU-PH- oder PH-Elastomersystemen mit Hilfe der Reaktionsspritzgußtechnik in einem Verfahrensschritt in kurzen Zykluszeiten, z.B. bei Formstandzeiten von ungefähr 5 bis 120 Sekunden, mit guten mechanischen Eigenschaften und in hoher Stückzahl hergestellt werden.

Ein Verglasungsaufbau, bestehend aus einer transparenten Scheibe und einer an ihrem Umfang haftenden Dichtung, und ein Verfahren zu seiner Herstellung sind ferner bekannt aus der DE-A 3 435 365. Zur Herstellung des Verglasungsaufbaus kann hierbei die Scheibe vor ihrem Einbringen in das Formnest an ihrem Randbereich mit einem Haftvermittler, wie z.B. γ-Aminopropyltriethoxysilan, beschichtet werden. Die Dichtung wird durch Einbringen und Aushärten einer Mischung aus linearen oder leicht verzweigten Polyoxypropylen-polyolen und Diphenylmethan-diisocyanaten in den Hohlraum des Formwerkzeugs hergestellt.

An diesen Verfahren verbesserungsfähig war jedoch noch die Haftung zwischen der Glasscheibe und den Polyisocyanat-polyadditionsprodukten.

Überraschenderweise zeigte es sich, daß diese Haftung durch die Verwendung eines Zweikomponenten Epoxidharz-Härter-Systems als Haftvermittler deutlich erhöht werden konnte.

Gegenstand der Erfindung ist somit ein Verfahren zum Ummanteln von mit Haftvermittler beschichteten Glasscheibenkanten mit reaktionsfähigen Mischungen zur Bildung von Polyurethan-, Polyurethan-Polyharnstoff- oder Polyharnstoff-Elastomeren in einem Formwerkzeug, das dadurch gekennzeichnet ist, daß als Haftvermittler ein Zweikomponenten-System aus mindestens einem organischen Epoxidharz und mindestens einem Härter verwendet wird.

Als organische Epoxidharze kommen vorzugsweise Verbindungen mit der Strukturformel

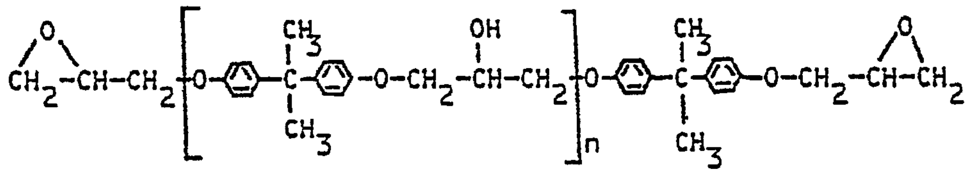

in Betracht, die ein Epoxid-Äquivalentgewicht (definiert als g Harz, die ein Mol Epoxid enthalten) von 140 bis 4000, vorzugsweise 140 bis 750 und insbesondere von 180 bis 200 besitzen.

Die organischen Epoxidharze weisen zweckmäßigerweise Epoxidwerte – definiert als Mol Epoxid/100 g Harz – von ungefähr 0,02 bis 0,8, vorzugsweise 0,1 bis 0,7 und insbesondere 0,5 bis 0,6 auf und sind bei Raumtemperatur fest oder vorzugsweise flüssig, wobei die flüssigen Produkte bei 25°C eine Viskosität von ungefähr 7 bis 220 Pa.s, vorzugsweise 80 bis 120 Pa.s haben.

Geeignet sind jedoch auch andere Epoxidharze, beispielsweise solche auf Basis von Methylolgruppen aufweisenden Phenol-, Harnstoff- oder Melaminpolykondensationsprodukten oder modifizierte Epoxidharze, beispielsweise solche, bei denen die Hydroxylgruppen in der obengenannten Strukturformel ganz oder teilweise mit Carbonsäuren verestert oder mit organischen Isocyanatgruppen in Urethangruppen übergeführt wurden.

Als Härter können im Prinzip organische polyfunktionelle Verbindungen verwendet werden, die mit den Hydroxyl- oder endständigen Epoxidgruppen der Epoxidharze reagieren und zwar so reagieren, daß die Zweikomponenten--Systeme für die Verarbeitung eine ausreichende Topfzeit besitzen und danach möglichst rasch aushärten. Beispielhaft genannt seien organische, gegebenenfalls modifizierte, z.B. Urethan-, Isocyanurat-, Allophanat-Biuret- und/oder Carbodiimidgruppen aufweisende aromatische, aliphatische und/oder cycloaliphatische Polyisocyanate, Ketimine oder Polyamide. Besonders bewährt als Härter haben sich jedoch und daher vorzugsweise verwendet werden organische Polyaminaddukte und/oder insbesondere organische Polyamine. In Betracht kommen gegebenenfalls mit Alkylgruppen mit 1 bis 4, vorzugsweise 1 bis 2 Kohlenstoffatomen substituierte aromatische, cycloaliphatische oder aliphatische di- und/oder höherfunktionelle Polyamine. Beispielhaft genannt seien aliphatische Di- oder Polyamine mit 2 bis 20, vorzugsweise 2 bis 12 C-Atomen im linearen oder gegebenenfalls verzweigten Alkylenrest, wie z.B. Ethylen-, 1,3-Propylen-, 1,4- bzw. 1,3-Butylen-, 2-Ethyl-1,4-butylen-, 2-Methyl-1,5-pentamethylen-, 1,6-Hexamethylen-diamin, Diethylen-triamin, Dipropylen-triamin, Triethylen-tetramin, Tripropylen-tetramin, Tetraethylen-pentamin u.a., cycloaliphatische Di- oder Polyamine mit 6 bis 42, vorzugsweise 6 bis 19 C-Atomen im gegebenenfalls Alkylenbrückenglieder gebunden enthaltenen Cycloalkylenrest, wie z.B. 1,3- bzw. 1,4-Diamino-cyclohexan, 1-Methyl-2,4- bzw. 2,6-diaminocyclohexan, 4,4'-Diamino-dicyclohexylmethan, 3,3'-Dimethyl--4,4'-diamino-dicyclohexylmethan, 4,4'-Diamino-dicyclohexyl-propan-2,2 und Polycyclohexyl-polymethylen-polyamine und aromatische Di- oder Polyamine mit 6 bis 42, vorzugsweise 6 bis 19 C-Atomen im gegebenenfalls Alkylenbrückenglieder gebunden enthaltenden Arylenrest, wie z.B. 1,3- bzw. 1,4-Phenylendiamin, 1-Methyl-2,4- bzw. -2,6-phenylendiamin, 1-Methyl-3,5-diethyl-2,4- bzw. -2,6-phenylen-diamin, 1,3,5-Triethyl-2,4-phenylendiamin, 4,4'-, 2,4'-Diaminodiphenylmethan, 3,3'-Dimethyl-4,4'-diamino-diphenylmethan und Polyphenyl-polymethylen-polyamine. Die organischen Diamine oder höherfunktionellen Polyamine können einzeln oder in Form von Mischungen eingesetzt werden.

Als Polyaminaddukte finden Umsetzungsprodukte aus organischen Di-und/oder Polyaminen, beispielsweise den oben beschriebenen gegebenenfalls alkylsubstituierten aromatischen, cycloaliphatischen oder aliphatischen di- und/oder höherfunktionellen Polyaminen, und organischen difunktionellen Verbindungen, die mit Aminogruppen reagierende Substituenten gebunden enthalten, im Molverhältnis von 2:1 und größer Anwendung. Als difunktionelle reaktive organische Verbindungen seien beispielsweise genannt: aliphatische, cycloaliphatische und/oder aromatische Diisocyanate, Dicarbonsäureester, Dicarbonsäuredihalogenide, vorzugsweise Dicarbonsäuredichloride und aromatische und/oder aliphatische Diepoxide.

Die erforderliche Härtermenge richtet sich nach der Hydroxylzahl, z.B. bei Verwendung eines Polyisocyanathärters, oder vorzugsweise nach dem Epoxidwert des Epoxidharzes und dem Wasserstoff aktiven Äquivalentgewicht des verwendeten Härters, beispielsweise des organischen Polyamins und/oder Polyaminaddukts. Das wasserstoffaktive Äquivalentgewicht ergibt sich durch Division des Molekulargewichts des Härters durch die Zahl der reaktiven Wasserstoffatome z.B. durch Division des Molekulargewichts des Polyamins oder Polyaminaddukts durch die Anzahl der am Stickstoff gebundenen Wasserstoffatome.

Durch Multiplikation des Epoxidwertes mit dem wasserstoffaktiven Äquivalentgewicht des Härters berechnet man die theoretisch für 100 Gew.Teile organisches Epoxidharz erforderliche Mindestmenge des Härters. Bezogen auf äquivalente Mengen des Zweikomponenten-Systems verwendet man zweckmäßigerweise einen Überschuß an Härter von bis zu 30 %, vorzugsweise 8 bis 20 %. Auf diese Weise finden pro 100 Gew.Teile organisches Epoxidharz 3 bis 55 Gew.Teile, vorzugsweise 8 bis 40 Gew.Teile Härter, vorzugsweise eines Polyaminaddukts und/oder insbesondere eines organischen Polyamins Anwendung.

Die erfindungsgemäß als Haftvermittler verwendbaren Zweikomponenten--Systeme, insbesondere diejenigen aus einem oder mehreren Epoxidharzen und einem oder mehreren organischen Polyaminen, können lösungsmittelsfrei oder in Form von Lösungen verarbeitet werden. Die lösungsmittelfreien Systeme besitzen üblicherweise kurze Topfzeiten, da die Abwesenheit von Lösungsmitteln und der hohe Gehalt an Epoxid- und Aminogruppen im System eine stark exotherme Reaktion bedingen. Bei Verwendung von Ketimin-Härtern, die durch Einwirkung von Feuchtigkeit in wirksames Polyamin und flüchtiges Keton gespalten werden, läßt sich die Topfzeit auf mehrere Stunden, beispielsweise 10 bis 12 Stunden verlängern.

Als geeignete Lösungsmittel zum Lösen der erfindungsgemäß verwendbaren Zweikomponenten-Systeme seien beispielhaft genannt: Ketone wie z.B. Aceton, Methylethylketon, Methylisobutylketon, Methylcyclohexanon und Methoxihexanon, organische Carbonsäureester, vorzugsweise Alkylacetate, wie z.B. Ethyl-, n-Butyl-, Methylglykol-, Ethylglykol- und Isopropylglykolacetat und ein- oder mehrwertige Alkohole wie z.B. Isopropanol, n-Butanol, sek.-Butylalkohol, Methylglykol, Ethylglykol, Isopropylglykol, Butylglykol, Methoxihexanol, Ethyldiglykol und Butyldiglykol. Verwendet werden können ferner Gemische aus Aromaten, vorzugsweise Toluol und den anderen Lösungsmitteln, vorzugsweise Ketonen oder Alkoholen, beispielsweise Gemische aus Toluol und Aceton, Methylethylketon, Isopropanol, sek.-Butylalkohol oder n-Butanol im Gewichtsverhältnis 1:1.

Der Gehalt der Lösung an dem erfindungsgemäß verwendbaren Zweikomponenten-Epoxidharz-Härter-System ist abhängig von der Art des Lösungsmittels oder Lösungsmittelgemisches und kann, bezogen auf das Gesamtgewicht der Lösung, bis zu 90 Gew.%, vorzugsweise 40 bis 20 Gew.% betragen. Im Hinblick auf eine möglicherweise begrenzte Löslichkeit, kann es zweckmäßig sein, zuerst eine konzentrierte Lösung herzustellen und diese vor der Verarbeitung auf den gewünschten Gehalt an Epoxidharz und Härter zu verdünnen.

Zur Beschleunigung der Härtung oder/und gegebenenfalls Erniedrigung der Härtungstemperatur können den Zweikomponenten-Systemen Härtungskatalysatoren einverleibt werden. Hierfür geeignet sind anorganische und organische Säuren oder thermisch spaltbare Ammonium- oder Aminsalze, die, bezogen auf den Gehalt an Epoxidharz und Härter, in Mengen von 0,01 bis 3, vorzugsweise 0,1 bis 2 Gew.%, eingesetzt werden. Beispielhaft genannt seien anorganische Säuren wie z.B. Phosphorsäure, aliphatische Carbonsäuren wie z.B. Cyanessigsäure, organische Carbonsäure oder -derivate wie z.B. Salicylsäure, Benzoesäure oder Phthalsäureanhydrid und Salze wie z.B. Amin-Borfluoridkomplexe, Morpholinsalze der p-Toluolsulfonsäure oder Anilinhydrochlorid. Die Härtungstemperaturen können innerhalb eines breiten Bereichs, beispielsweise von 20 bis 220°C, variiert werden. Vorzugsweise Anwendung finden Temperaturen von 50 bis 130°C, insbesondere von 80 bis 100°C.

Die erfindungsgemäß verwendbaren Zweikomponenten-Epoxidharz-Härtersysteme können gegebenenfalls auch mit anderen Haftvermittlern kombiniert werden oder es können die Glasscheiben mit anderen Haftvermittlern vorbehandelt werden. Sofern eine derartige Maßnahme durchgeführt wird, finden als Haftvermittler insbesondere Silanverbindungen mit der allgemeinen Formel

$(RO)_3Si\text{-}R'\text{-}X$

Verwendung, in der X eine reaktive organische Gruppe wie z.B. eine Amino-, Mercapto-, Chloralkyl-, Vinyl-Methacrylat oder Epoxigruppe, R' eine $-(CH_2-)_n$Gruppe, insbesondere $-(CH_2-)_3$, und n eine ganze Zahl von 2 bis 10, vorzugsweise 2 bis 4 bedeuten. Geeignete Silanhaftvermittler der genannten Art werden beispielsweise von Ward Collins in Modern Plastics Encyclopedia 1977-1978, Seiten 163ff. beschrieben.

Glasscheiben mit unterschiedlicher chemischer Zusammensetzung können zur Ummantelung der Kanten eingesetzt werden.

Vorzugsweise Verwendung finden Glasscheiben aus Silikatglas. Geeignet sind jedoch auch mechanisch oder chemisch vorbehandelte Glasscheiben, z.B. mit Metalldampf beschichtete oder mit transparenten Kunststoffolien, beispielsweise Polyamid-, Polycarbonat- oder Polyurethanfolien belegte Glasscheiben sowie Verbundglasscheiben. Die Glasscheiben besitzen üblicherweise eine Dicke von 3 bis 20 oder mehr mm, vorzugsweise von 3 bis 8 mm.

Zur Erzielung eines gut haftenden Verbunds wird die gereinigte und insbesondere entfettete sowie danach gegebenenfalls mit Haftvermittler auf Basis von Silanverbindungen vorbehandelte Randzone der Glasscheibenkanten vor der Ummantelung mit PU-, PU-PH- oder PH-Elastomeren mit dem erfindungsgemäßen Zweikomponenten-Epoxidharz-Härter-System beschichtet. Je nach chemischer Zusammensetzung der Glasscheiben und Struktur des Zweikomponenten-Systems wird dieser nach bekannten Methoden, beispielsweise durch Bestreichen, Besprühen, Rollen, Eintauchen u.a. in solchen Mengen aufgetragen, daß nach Verdunsten des gegebenenfalls mitverwendeten Lösungsmittels die Schichtdicke 5 bis 80, vorzugsweise 10 bis 40 Mikrometer beträgt. Die Haftvermittlerschicht, die aus einer oder mehreren Lagen bestehen kann, wird üblicherweise in einem ein- oder mehrstufigen Verfahren aufgebracht, wobei man gegebenenfalls bei niedrigen Temperaturen das Lösungsmittel verdampfen und bei erhöhten Temperaturen das Epoxidharz-Härter-System aushärten läßt.

Zum Ummanteln der Glasscheibenkanten mit reaktionsfähigen Mischungen zur Bildung von PU-, PU-PH- oder PH-Elastomeren in einem Formwerkzeug wird

1. die an der Randzone mit dem erfindungsgemäß verwendbaren Zweikomponenten-Haftvermittler-System beschichtete Glasscheibe in das offene Formwerkzeug eingelegt,
2. das Formwerkzeug verschlossen,
3. der hierbei gebildete Freiraum zwischen Glasscheibe und Formwerkzeug mit einer reaktionsfähigen Mischung aus
a) mindestens einem organischen Polyisocyanat,
b) mindestens einer höhermolekularen Verbindung mit mindestens zwei reaktiven Wasserstoffatomen,
c) mindestens einem Kettenverlängerungsmittel und/oder Vernetzer und
d) mindestens einem Katalysator sowie gegebenenfalls
e) Hilfsmitteln und/oder Zusatzstoffen beschickt und
4. die Reaktionsmischung aushärten gelassen.

Zu den für das erfindungsgemäße Verfahren verwendbaren Ausgangskomponenten (a) bis (d) und gegebenenfalls (e) zur Herstellung der kompakten oder gegebenenfalls zelligen PU-, PU-PH- oder PH-Elastomeren ist folgendes auszuführen:

(a) Als organische Polyisocyanate kommen die an sich bekannten aliphatischen, cycloaliphatischen und vorzugsweise aromatischen mehrwertigen Isocyanate in Frage. Im einzelnen seien beispielhaft genannt 1,6-Hexamethylen-diisocyanat, 1-Isocyanato-3,3,5-trimethyl-3-isocyanatomethyl-cyclohexan, 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, Mischungen aus 4,4'-, 2,2'- und 2,4'-Dicyclohexylmethan-diisocyanaten und Polymethylen-polycyclohexylen-polyisocyanaten, 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten.

Häufig werden auch sogenannte modifizierte mehrwertige Isocyanate, d.h. Produkte, die durch chemische Umsetzung obiger Di- und/oder Polyisocyanate erhalten werden, verwendet. Beispielhaft genannt seien Ester-, Harnstoff-, Biuret-, Allophanat- und vorzugsweise Carbodiimid-, Isocyanurat- und/oder Urethangruppen enthaltende Di- und/oder Polyisocyanate. Im einzelnen kommen beispielsweise in Betracht: Urethangruppen enthaltende aromatische Polyisocyanate mit NCO-Gehalten von 33,6 bis 15 Gew.%, vorzugsweise von 31 bis 21 Gew.%, beispielsweise mit niedermolekularen Diolen, Triolen, Dialkylenglykolen, Trialkylenglykolen oder Polyoxyalkylen-glykolen mit Molekulargewichten bis 800 modifiziertes 4,4'-Diphenylmethan-diisocyanat oder Toluylen-diisocyanat, wobei als Di- bzw. Polyoxyalkylenglykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 21 bis 9 Gew.%, vorzugsweise von 21 bis 14 Gew.%. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.%, z.B. auf Basis von 4,4'-, 2,4'- und/oder 2,2'-Diphenylmethan-diisocyanat und/oder 2,4- und/oder 2,6-Toluylen-diisocyanat und insbesondere 2,4- und 2,6-Toluylen-diisocyanat sowie die entsprechenden Isomerengemische, 4,4'-, 2,4'- und 2,2'-Diphenylmethan-diisocyanat sowie die entsprechenden Isomerengemische z.B. aus 4,4'-und 2,4'-Diphenylmethan-diisocyanaten, Mischungen aus Diphenylmethan-diisocyanaten und Polyphenyl-polymethylen-polyisocyanaten (Roh-MDI) und Gemische aus Toluylen-diisocyanaten und Roh-MDI.

Vorzugsweise kommen jedoch zur Anwendung: Urethangruppen, Carbodiimidgruppen und/oder Isocyanuratringe enthaltende Polyisocyanate, z.B. auf Diphenylmethan-diisocyanat und/oder Toluylen-diisocyanat-Basis, Toluylen-diisocyanate, Mischungen aus Roh-MDI und Toluylen-diisocyanaten und insbesondere Mischungen aus 4,4'- und 2,4'-Diphenylmethan-diisocyanaten oder Mischungen aus den Diphenylmethan-diisocyanat-Isomeren und Polyphenyl-polymethylen-polyisocyanaten.

(b) Als höhermolekulare Verbindungen (b) mit mindestens zwei reaktiven Wasserstoffatomen werden zweckmäßigerweise solche mit einer Funktionalität von 2 bis 8, vorzugsweise 2 bis 4 und einem Molekulargewicht von 800 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppen-haltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder

Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentan-diol und 1,6-Hexandiol. Eingesetzt werden können ferner Polyester-polyole aus Lactonen, z.B. -Caprolacton, oder Hydroxycarbonsäuren, z.B. -Hydroxycapron- säure.

Die Polyester-polyole besitzen vorzugsweise eine Funktionalität von 2 bis 3 und ein Molekulargewicht von 800 bis 3.000 und vorzugsweise 1.800 bis 2.500.

Insbesondere als Polyole verwendet werden jedoch Polyetherpolyole, die nach bekannten Verfahren, beispielsweise durch kationische Polymerisation mit Lewis-Säuren, wie Antimonpentachlorid, Borfluorid-Etherat u.a. oder Bleicherde als Katalysatoren oder durch anionische Polymerisation mit Alkalihydroxiden, wie Natrium- oder Kaliumhydroxid, oder Alkali-alkoholaten, wie Natriummethylat, Natrium- oder Kaliumethylat oder Kaliumisopropylat als Katalysatoren aus einem oder mehreren Alkylenoxiden mit 2 bis 4 Kohlenstoffatomen im Alkylenrest und bei der anionischen Polymerisation einem Startermolekül, das 2 bis 8, vorzugsweise 2 bis 4, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenyl- methan.

Als Startermoleküle kommen ferner in Betracht Alkanolamine, wie Ethanolamin, Diethanolamin, N-Methyl- und N-Ethyl-ethanolamin, N-Methyl und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.

Die Polyether-polyole besitzen vorzugsweise eine Funktionalität von 2 bis 4 und Molekulargewichte von 800 bis 8.000, vorzugsweise 1.200 bis 6.000 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppen-haltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).

(c) Als Kettenverlängerungsmittel und/oder Vernetzer (c) verwendet werden di- bis tetrafunktionelle, vorzugsweise, difunktionelle Verbindungen mit Molekulargewichten von 60 bis 600, vorzugsweise 60 bis 300 aus der Gruppe der aliphatischen, cycloaliphatischen oder araliphatischen Diole und/oder Triole, der sekundären aromatischen Diamine und vorzugsweise der primären, unsubstituierten und/oder insbesondere substituierten aromatischen Di- und/oder höherwertigen Polyamine.

Geeignete Diole oder Triole besitzen vorteilhafterweise Molekulargewichte kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Starter-moleküle.

Als sek. aromatische Diamine seien beispielhaft genannt: N,N'-dialkyl-substituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek.-pentyl-, N,N'-Di-sek-hexyl-, N,N'-Di-sek-decyl-, N,N'-Dicyclohexyl-p- bzw. -m-phenylendiamin, N,N'-Dimethyl-, N,N'-Diethyl-, N'N-Diisopropyl-, N,N'-Di-sek-butyl-, N,N'-Dicyclohexyl-4,4'-diamino-diphenylmethan und N,N'-Di-sek-butyl-benzidin.

Als unsubstituierte primäre aromatische Diamine und/oder höherwertige Polyamine finden beispielsweise Verwendung: 1,2-, 1,3- und 1,4-Phenylendiamin, Benzidin, 4,4'- und 2,4'-Diaminodiphenylmethan, 4,4'- und 2,4'-Diaminodiphenylmethan, 4,4'-Diaminodiphenylether, Napthylen-1,5 -diamin, Naphthylen-1,8-diamin und Polyphenyl-polymethylen-polyamine sowie Mischungen aus Diamino-diphenylmethanen und Polyphenyl-polymethylen-polyaminen. Geeignet sind auch substituierte primäre aromatische Diamine, zweckmäßigerweise monoalkylsubstituierte aromatische Diamine, bei denen die Reaktivität der Aminogruppe durch den Substituenten nicht wesentlich negativ beeinflußt wird, wie z.B. 3,4-, 2,4- und 2,6-Toluylen-diamin.

Als substituierte primäre aromatische Diamine und/oder höherwertige Polyamine die insbesondere Anwendung finden, werden zweckmäßigerweise solche verwendet, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit der Komponente (b) unter den Verarbeitungsbedingungen zumindest teilweise, vorzugsweise jedoch vollständig mischbar sind. Bewährt haben beispielsweise alkylsubstituierte meta-Phenylendiamine der Formeln

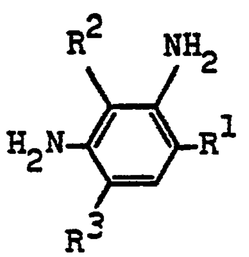

und/oder

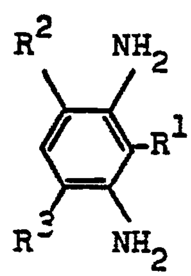

in denen $R^3$ und $R^2$ gleich oder verschieden sind und einen Methyl-, Ethyl-, Propyl- und Isopropylrest bedeuten und $R^1$ ein linearer oder verzweigter Alkylrest mit 1 bis 10, vorzugsweise 4 bis 6 Kohlenstoffatomen ist. Insbesondere bewährt haben sich solche Alkylreste $R^1$, bei denen die Verzweigungsstelle am $C^1$-Kohlenstoffatom sitzt. Als Reste $R^1$ seien beispielhaft genannt der Methyl-, Ethyl-, Isopropyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propyl-Rest.

Als alkylsubstituierte m-Phenylendiamine kommen beispielsweise in Betracht: 2,4-Dimethyl-6-cyclohexyl-, 2-Cyclohexyl-4,6-diethyl-, 2-Cyclo-hexyl-2,6-isopropyl-, 2,4-Dimethyl-6-(1-ethyl-n-propyl)-, 2,4-Dimethyl-6-(1,1-dimethyl-n-propyl)-, 2-(1-Methyl-n-butyl)-4,6-di-methylphenylendiamin-1,3. Vorzugsweise verwendet werden 1-Methyl-3,5-diethyl-2,4- bzw. -2,6-phenylendiamine, 2,4-Dimethyl-6-tert.butyl-, 2,4-Dimethyl-6-isooctyl- und 2,4-Dimethyl-6-cyclohexyl-phenylendiamin-1,3.

Geeignet sind ferner 3,3'-di- und/oder 3,3',5,5'-tetra-n-alkylsubstituierte 4,4'-Diamino-diphenylmethane wie z.B. 3,3'-Dimethyl-, 3,3'-Diethyl-, 3,3'-Di-n-propyl-, 3,3',5,5'-Tetramethyl-, 3,3',5,5'-Tetraethyl- und 3,3',5,5'-Tetra-n-propyl-4,4'-diaminodiphenylmethan.

Als alkylsubstituierte 4,4'-Diamino-diphenylmethane finden vorzugsweise solche der Formel

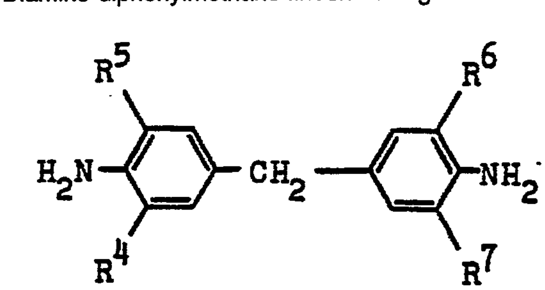

Verwendung, in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.Butylrest sein muß. Die 4,4'-Diamino-diphenylmethane können auch im Gemisch mit Isomeren der Formeln

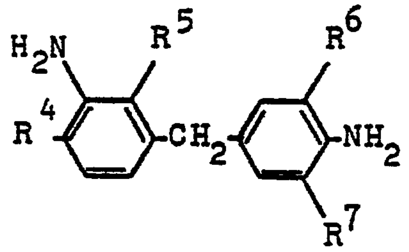

und/oder

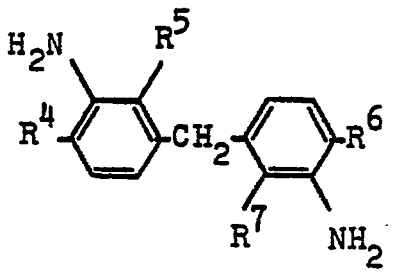

verwendet werden, wobei $R^4$, $R^5$, $R^6$ und $R^7$ die obengenannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek.butyl-, 3,3',5-Triethyl-5'-sek.butyl-4,4'-diamino-diphenylmethan, 3,3'-Dimethyl-5,5'-di-isopropyl-, 3,3'-Diethyl-5,5'-diisopropyl-, 3,3'-Dimethyl-5,5'-di-sekbutyl-, 3,3'-Di-ethyl-5,5'-di-sek-butyl-, 3,5-Dimethyl-3',5'-diisopropyl-, 3,5-Diethyl-3',5'-diisopropyl-, 3,5'-Dimethyl-3',5-di-sek-butyl-, 3,5-Diethyl-3',5'-di-sek-butyl-4,4'-diamino-diphenylmethan, 3-Methyl-3',5,5'-triiso-propyl-, 3-Ethyl-3',5,5'-triisopropyl-, 3-Methyl-3',5,5'-tri-sek-butyl-, 3-Ethyl-3',5,5'-tri-sek-butyl-4,4' -diamino-diphenylmethan, 3,3'-Diisopropyl-5,5'-di-sek-butyl-, 3,5-Diisopropyl-3',5'-di-sek-butyl-, 3-Ethyl-5-sek-butyl-3',5'-diiso propyl-, 3-Methyl-5-tert.butyl-3',5'-diisopropyl-, 3-Ethyl-5-sek.-butyl-3'-methyl-5'-tert.butyl-, 3,3',5,5'-Tetraisopropyl- und 3,3',5,5'-Tetra-sek-butyl-4,4'-diaminodiphenylmethan. Vorzugsweise verwendet werden 3,5-Dimethyl-3',5'-diisopropyl- und 3,3',5,5'-Tetra-isopropyl-4,4'-diamino-diphenylmethan. Die Diamino-diphenylmethane können einzeln oder in Form von Mischungen eingesetzt werden.

Die genannten Kettenverlängerungsmittel und/oder Vernetzer (c) können einzeln oder als Mischungen von gleichen oder verschiedenen Arten verwendet werden. Bewährt haben sich beispielsweise Mischungen aus 5 bis 95 Gew.% mindestens eines Diols und/oder Triols und 95 bis 5 Gew.% mindestens eines alkylsubstituierten meta-phenylen -diamins, 3,3'-dialkyl- und/oder 3,3',5,5'-tetraalkylsubstituierten 4,4'-Diamino-diphenylmethans oder vorzugsweise alkylsubstituierten meta-Phenylen-diamins, wobei die Gew.% bezogen sind auf das Gesamtgewicht der Komponente (c) und insbesondere Mischungen aus 80 bis 50 Gew.% 2,4-Dimethyl-6-tert.-butyl-phenylendiamin-1,3, 2,4-Diethyl-6-methyl- und/oder 2-Methyl-4,6-diethyl-phenylendiamin-1,3 und 20 bis 50 Gew.% 1,3-Phenylen-diamin, 2,4- und/oder 2,6-Toluylendiamin, wobei die Gew.% bezogen sind auf das Gesamtgewicht der Mischung der Komponenten (c).

Die Kettenverlängerungsmittel und/oder Vernetzer (c) sowie deren Mischungen kommen beim erfindungsgemäßen Verfahren in Mengen von 2 bis 60 Gew.%, vorzugsweise 8 bis 50 Gew.% und insbesondere 10 bis 40 Gew.%, bezogen auf das Gewicht der Komponente (b) zum Einsatz.

d) Als Katalysatoren (d) werden insbesondere Verbindungen verwendet, die die Reaktion der Hydroxylgruppen enthaltenden Verbindungen der Komponenten (b) und (c) mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen, wie Triethanolamin, Triisopropanolamin, N-Methyl- und N-Ethyldiethanolamin und Dimethylethanolamin.

Als Katalysatoren kommen ferner in Betracht: Tris-(dialkylaminoalkyl)-s--hexahydrotriazine, insbesondere Tris-(N,N-dimethylaminopropyl)-s-hexahydrotriazin, Tetraalkylammoniumhydroxide, wie Tetramethylammonium-hydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew., insbesondere 0,05 bis 2 Gew. Katalysator bzw. Katalysatorkombination bezogen auf das Gewicht der Komponente (b).

e) Der Reaktionsmischung können gegebenenfalls auch noch Hilfsmittel und/oder Zusatzstoffe (e) einverleibt werden. Genannt seien beispielsweise Treibmittel, oberflächenaktive Substanzen, Füllstoffe, Farbstoffe, Pigmente, Flammschutzmittel, Trennmittel, Hydrolyseschutzmittel, fungistatisch und bakteriostatisch wirkende Substanzen.

Zu Treibmitteln, welche im erfindungsgemäßen Verfahren gegebenenfalls verwendet werden können,

gehört Wasser, das mit Isocyanatgruppen unter Bildung von Kohlendioxid reagiert. Die Wassermengen, die zweckmäßigerweise verwendet werden können, betragen 0,1 bis 2 Gew.%, bezogen auf das Gewicht an Polyisocyanat.

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen PU-, PU-PH- oder PH-Elastomeren hängt ab von der Dichte, die man erreichen will sowie gegebenenfalls von der Mit verwendung von Wasser. Im allgemeinen liefern Mengen von 1 bis 15 Gewichtsteilen, bezogen auf 100 Gewichtsteile organisches Polyisocyanat, zufriedenstellende Ergebnisse.

Als oberflächenaktive Substanzen kommen Verbindungen in Betracht, welche zur Unterstützung der Homogenisierung der Ausgangsstoffe dienen. Genannt seien beispielsweise Emulgatoren, wie die Natriumsalze von Ricinusölsulfaten oder von Fettsäuren sowie Salze von Fettsäuren mit Aminen, z.B. ölsaures Diethylamin oder stearinsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt: anorganische Füllstoffe wie silikatische Mineralien, beispielsweise Schichtsilikate, wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest und Wollastonit. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyether-polyolen analog den Angaben der deutschen Patentschriften 11 11 394, 12 22 669 (US 3 304 273, 3 383 351, 3 523 093), 11 52 536 (GB 1 040 452) und 11 52 537 (GB 987 618) hergestellt und danach gegebenenfalls aminiert werden sowie Filler-polyoxyalkylen-polyole oder -polyamine, bei denen wäßrige Polymerdispersionen in Polyoxyalkylen-polyol- oder -polyamindispersionen übergeführt werden.

Die anorganischen und organischen Füllstoffe können einzeln oder als Gemische verwendet werden. Vorzugsweise Anwendung finden stabile Füllstoff-Polyoxyalkylen-polyol-Dispersionen, bei denen die Füllstoffe in Gegenwart von Polyoxyalkylen-polyolen in situ mit hohen örtlichen Energiedichten auf eine Teilchengröße kleiner als 7 1μ zerkleinert und hierbei gleichzeitig dispergiert werden.

Die anorganischen und/oder organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Band VII, Polyurethane 1. und 2. Auflage, Carl Hanser Verlag, München 1966 und 1983, zu entnehmen.

Zur Herstellung der PU-, PU-PH- oder PH-Elastomeren werden die organischen Polyisocyanate (a), höhermolekularen Verbindungen mit mindestens zwei reaktiven Wasserstoffatomen (b) und Kettenverlängerungsmittel und/oder Vernetzer (c) in solchen Mengen zur Umsetzung gebracht, daß das Äquivalenz-Verhältnis von NCO-Gruppen der Polyisocyanate (a) zur Summe der reaktiven Wasserstoffatome der Komponenten (b) und (c) 1 : 0,85 bis 1,25, vorzugsweise 1 : 0,95 bis 1,15 und insbesondere 1 : 0,98 bis 1,05 beträgt.

Die Ummantelung der Glasscheibenkanten nach dem erfindungsgemäßen Verfahren wird zweckmäßigerweise in temperierbaren metallischen Formwerkzeugen z.B. aus Stahl, Gußeisen, Aluminium oder in gegebenenfalls verstärkten beispielsweise mit Fasern, wie Glas- oder Kohlenstoff-Fasern verstärkten, Kunststofformen, z.B. aus Epoxidharzen, ungesättigen Polyesterharzen u.a. durchgeführt. Verwendung finden üblicherweise mehrteilige Formwerkzeuge mit einer oberen und unteren Formplatte, die zwischen sich den umlaufenden Aufnahmeraum für die Schnittkante der Glasscheibe und den Freiraum für die reaktionsfähige PU-, PU-PH- oder PH-Elastomermischung bilden. Zur Abdichtung des auszugießenden bzw. vorzugsweise auszuspritzenden Freiraums und zum Verhindern eines kapillaren Kriechens der reaktionsfähigen Elastomermischung entlang dem Glasscheibenrand wird zwischen dem Formwerkzeug und der Glasscheibe zweckmäßigerweise ein Dichtungsprofil aus elastischem Material, beispielsweise aus Kunststoffpolymeren, -polykondensations- oder -polyadditionsprodukten eingelegt oder ein anderes Dichtungsmittel eingebracht. Ferner können in dem Freiraum zusätzliche Befestigungselemente angeordnet oder die Formwerkzeugoberfläche des Freiraums mit Trennfolien oder vorzugsweise Dekormaterialien, beispielsweise aus Metall- oder bedruckten Kunststoff-Folien beschichtet oder in den Freiraum Zierleisten aus Metall oder Kunststoff eingelegt werden und über die PU-, PU-PH oder PH-Elastomeren mit der Glasscheibe in einem Arbeitsgang verbunden werden.

Die Glasscheibe wird zweckmäßigerweise horizontal in das Formwerkzeug eingelegt. Andere Neigungswinkel zwischen 0 und 90°, vorzugsweise 0 und 45° sind jedoch ebenfalls möglich. Ferner kann das die Glasscheibe enthaltende verschlossene Formwerkzeug um die 3 senkrecht aufeinander stehende Raumachsen beliebig gedreht oder die reaktionsfähige Elastomermischung von unten, oben und/oder den Seiten eingespritzt werden.

Die Herstellung der PU-, PU-PH- oder PH-Elastomeren erfolgt nach dem Prepolymer-Verfahren oder vorzugsweise nach dem one shot-Verfahren, beispielsweise durch Eingießen der Reaktionsmischung in den Freiraum des Formwerkzeugs oder vorzugsweise durch Einspritzen mit Hilfe der bekannten Reaktionsspritzguß-Technik (RIM). Diese Verfahrensweise wird beispielsweise beschrieben von Piechota und Röhr in "Integralschaumstoff", Carl-Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Kettenverlängerungsmittel und/oder Vernetzer (c) in den höhermolekularen Verbindungen mit mindestens zwei reaktiven Wasserstoffatomen (b) zu lösen und mit den Katalysatoren sowie gegebenenfalls Hilfs- und Zusatzstoffen in der Komponente (A) zu vereinigen und als Komponente (B) die organischen Polyisocyanate zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die Menge des in das Formwerkzeug eingebrachten Reaktionsgemisches wird so bemessen, daß die Kantenprofile aus PU-, PU-PH- oder PH-Elastomeren eine Dichte von 0,8 bis 1,4 $g/cm^3$, vorzugsweise von 0,9 bis 1,2 $g/cm^3$ besitzen, wobei gegebenenfalls zellige Elastomere beispielsweise gebildet werden können durch in das Reaktionsgemisch eingeschlagene Gase, insbesondere Luft, durch Verwendung von Feuchtigkeit enthaltende Ausgangsstoffe (b) bis (e) oder durch gezielte Zugabe von Wasser und/oder inerten physikalisch wirkenden Treibmitteln. Die Ausgangskomponenten werden bei Temperaturen von 15 bis 80°C, vorzugsweise von 20 bis 55°C gemischt und in das Formwerkzeug eingebracht. Die Formwerkzeugtemperatur beträgt zweckmäßigerweise 20 bis 90°C, vorzugsweise 30 bis 75°C.

Die nach dem erfindungsgemäßen Verfahren erhaltenen Kantenprofile aus PU-, PU-PH- oder PH-Elastomeren besitzen eine Härte von Shore A 40 bis Shore D 60, vorzugsweise von Shore A 40 bis 80 und insbesondere von Shore A 40 bis 60, nach DIN 53 505, eine Zugfestigkeit von 5 bis 27 $N/mm^2$, vorzugsweise von 5 bis 16 $N/mm^2$ nach DIN 53 504 und eine Weiterreißfestigkeit von 3,5 bis 30 N/mm, vorzugsweise von 3,5 bis 19 N/mm nach DIN 53 507.

Die mit PU-, PU-PH- oder PH-Elastomeren ummantelten Glasscheiben finden vorzugsweise Verwendung in Verkehrsmitteln, beispielsweise in Schienen- und insbesondere Kraftfahrzeugen.

Die in den Beispielen genannten Teile beziehen sich auf das Gewicht.

Beispiel 1

Eine 5 mm dicke, fettfreie Silikatglasscheibe wurde im Bereich des nachfolgend aufzubringenden PU-PH-Elastomeren als Kantenumguß mit einem Haftvermittler-Zweikomponentensystem beschichtet, das bestand aus 100 Gew.Teilen eines Epoxidharzes auf Basis Epichlorhydrin-Diphenylolpropan mit einer Viskosität bei 25°C von 100-150 Pa.s, einem Epoxidwert von 0,51-0,56 und einem Epoxid-Äquivalentgewicht von 182-194 (®Epikote 828 der Deutschen Shell Chemie GmbH),
35 Gew.Teilen 3,3'-Dimethyl-4,4'-diaminodicyclohexylmethan, 20 Gew.Teilen einer 5 gew.%igen Lösung von Salicylsäure in Isopropanol und
30 Gew.Teilen Toluol.

Der Auftrag des Haftvermittler-Zweikomponentensystems erfolgte mit einem Filztupfer in einer Schichtstärke im flüssigen Zustand von 40 µm. Die beschichtete Glasscheibe wurde anschließend bei 100°C 10 Minuten lang getrocknet.

Die auf diese Weise vorbehandelte Silikatglasscheibe wurde horizontal in ein auf 70°C temperiertes Formwerkzeug aus Aluminium eingelegt und das Formwerkzeug verschlossen. In den Freiraum zwischen Silikatglasscheibe und Formwerkzeuginnenoberfläche wurde eine auf 50°C erwärmte PU-PH-Elastomermischung nach der Reaktionsspritzgußtechnik eingespritzt. Die Vermischung der auf 50°C erwärmten Komponenten A und B und die Füllung des Freiraums im Formwerkzeug mit der gebildeten PU-PH-Elastomermischung erfolgte mittels einer Hochdruckdosieranlage vom Typ ®Puromat 30 der Elastogran Maschinenbau GmbH, 8021 Straßlach.

Als A-Komponente verwendet wurde eine Mischung aus 81,0 Gew.Teilen eines Polyether-polyols mit

einer OH-Zahl von 26, das hergestellt wurde durch Addition von 1,2-Propylenoxid und anschließender Addition von Ethylenoxid an Trimethylolpropan,
12,6 Gew.Teilen 1,3-Dimethyl-5-tert.-butyl-2,4-diaminobenzol, 5,2 Gew.Teilen 1,3-Phenylen-diamin,
0,33 Gew.Teilen 1,4-Diazabicyclo-(2,2,2)-octan und 0,1 Gew.Teilen Dibutylzinndilaurat.

Die B-Komponente bestand aus 48 Gew.Teilen einer Mischung aus Polyoxypropylenglykol- und carbodiimidmodifiziertem 4,4'-Diphenylmethan-diisocyanat mit einem NCO-Gehalt von 26,5 Gew.%.

Die umgossene Silikatglasscheibe wurde nach 30 Sekunden entformt.

Das erhaltene PU-PH-Elastomere besaß folgende mechanische Eigenschaften:

| | |
|---|---|
| Dichte nach DIN 53 420 | 1,1 $g/cm^3$ |
| Shore-D-Härte nach DIN 53 505 | 61 |
| Zugfestigkeit nach DIN 53 504 | 28,0 $N/mm^2$ |
| Weiterreißfestigkeit nach DIN 53 507 | 28,7 N/mm |

Der Verbund zwischen Silikatglasscheibe und PU-PH-Elastomeren war zufriedenstellend.

Beispiel 2

Eine 5 mm dicke, fettfreie Silikatglasscheibe wurde analog den Angaben in Beispiel 1 mit einem Haftvermittler-Zweikomponentensystem beschichtet, das bestand aus
100 Gew.Teilen eines Epoxidharzes auf Epichlorhydrin-Diphenylolpropan--Basis der Dichte 1,58 $g/cm^3$ mit der Verarbeitungsviskosität 22 Sekunden im DIN 4 mm-Becher (Epoxidharz LC 81-0920 der BASF Farben und Fasern AG), 15 Gew.Teilen eines Polyaminhärters (Härter SC-0103 der BASF Farben und Fasern AG) und
20 Gew.Teilen eines xylolhaltigen Verdünnungsmittels (Verdünner SV 32-0373 der BASF Farben und Fasern AG).

Die auf diese Weise vorbehandelte Silikatglasscheibe wurde mit der in Beispiel 1 beschriebenen PU-PH-Elastomermischung analog der Verfahrensweise von Beispiel 1 ummantelt.

Die Haftung zwischen Silikatglasscheibe und PU-PH-Elastomeren war gut. Das PU-PH-Elastomere konnte manuell nicht abgezogen werden.

Die Scherfestigkeit nach R.N.U.R. 1108 ME, R.N.U.R. 1670 betrug 5 $N/mm^2$.

Beispiel 3

Eine 5 mm dicke, fettfreie Silikatglasscheibe wurde mit einer Lösung aus 3 Gew.Teilen Aminopropyl-trimethoxysilan in 97 Gew.Teilen Isopropanol im Bereich des nachfolgend aufzubringenden PU-PH-Elastomeren als Kantenumguß beschichtet. Der Auftrag der Aminopropyl-trimethoxysilanlösung erfolgte mit einem Filztupfer in einer Schichtdicke im flüssigen Zustand von 40 µm. Die beschichtete Silikatglasscheibe wurde anschließend bei 25°C 10 Minuten lang getrocknet.

Danach wurde analog den Angaben von Beispiel 2 das dort beschriebene Haftvermittler-Zweikomponentensystem aufgetragen und mit der in Beispiel 1 beschriebenen PU-PH-Elastomermischung die Silikatglasscheiben-kanten ummantelt.

Die Haftung zwischen Silikatglasscheibe und PU-PH-Elastomeren war sehr gut. Das PU-PH-Elastomere konnte manuell nicht abgezogen werden.

Die Scherfestigkeit nach R.N.U.R. 1108 ME, R.N.U.R. 1670 betrug 5 $N/mm^2$.

Die ummantelte Silikatglasscheibe wurde einer hydrolytischen Alterung in Wasser bei 70°C 7 Tage lang unterworfen. Die Scherfestigkeit nach R.N.U.R. 1108 ME, R.N.U.R. 1670 betrug danach 3,5 $N/mm^2$.

**Patentansprüche**

1. Verfahren zum Ummanteln von mit Haftvermittlern beschichteten Glasscheibenkanten mit reaktionsfähigen Mischungen zur Bildung von Polyurethan-, Polyurethan-Polyharnstoff- oder Polyharnstoff-Elastomeren in einem Formwerkzeug, dadurch gekennzeichnet, daß man als Haftvermittler ein Zweikomponenten-System aus mindestens einem organischen Epoxidharz und mindestens einem Härter verwendet.

2. Verfahren nach Anspruch 1, dadurch gekennzeichnet, daß man als organische Epoxidharze Verbindungen mit der Strukturformel

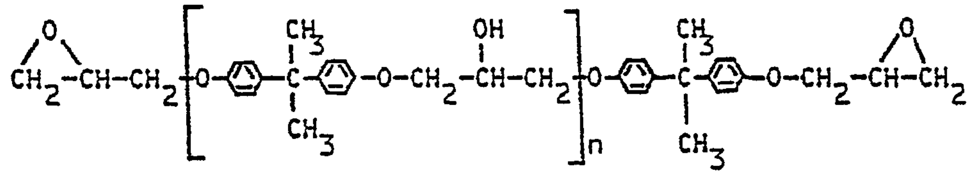

und einem Epoxid-Äquivalentgewicht von 140 bis 4000 verwendet.

3. Verfahren nach Anspruch 1, dadurch gekennzeichnet, daß man als Härter organische Polyamine und/oder Polyaminaddukte verwendet.

4. Verfahren nach Anspruch 1, dadurch gekennzeichnet, daß die als Haftvermittler verwendeten Zweikomponenten-Systeme pro 100 Gew.Teile organisches Epoxidharz 3 bis 55 Gew.Teile Härter enthalten.

5. Verfahren nach Anspruch 1, dadurch gekennzeichnet, daß man die als Haftvermittler verwendeten Zweikomponenten-Systeme aus organischem Epoxidharz und Härter in Form von Lösungen in organischen Lösungsmitteln verwendet.

6. Verfahren nach Anspruch 1, dadurch gekennzeichnet, daß man die als Haftvermittler verwendeten Zweikomponenten-Systeme aus organischem Epoxidharz und Härter auf die Glasscheibe in einer Schichtdicke von 5 bis 80 µm aufbringt.

7. Verfahren nach Anspruch 1, dadurch gekennzeichnet, daß man

1. die an der Randzone mit dem ZweikomponentenHaftvermittler--System beschichtete Glasscheibe in das offene Formwerkzeug einlegt,

2. das Formwerkzeug verschließt,

3. den hierbei gebildeten Freiraum zwischen Glasscheibe und Formwerkzeug mit einer reaktionsfähigen Mischung aus

a) mindestens einem organischen Polyisocyanat,

b) mindestens einer höhermolekularen Verbindung mit mindestens zwei reaktiven Wasserstoffatomen,

c) mindestens einem Kettenverlängerungsmittel und/oder Vernetzer und

d) mindestens einem Katalysator sowie gegebenenfalls

e) Hilfsmitteln und/oder Zusatzstoffen beschickt und

4. die Reaktionsmischung aushärten läßt.

8. Verfahren nach Anspruch 1, dadurch gekennzeichnet, daß man die reaktionsfähige Mischung zur Bildung der Polyurethan-, Poly-urethan-Poly- harnstoff- oder Polyharnstoff-Elastomeren in den Freiraum zwischen an der Randzone mit Haftvermittler beschichteter Glasscheibe und Formwerkzeug nach der Reaktionsspritzgußtechnik einspritzt.

9. Verfahren nach Anspruch 1, dadurch gekennzeichnet, daß die gehärteten Polyurethan-, Polyurethan-Polyharnstoff- oder Polyharnstoff-Elastomeren eine Dichte von 0,8 bis 1,4 g/cm³, eine Härte von Shore A 40 bis Shore D 60 nach DIN 53 505, eine Zugfestigkeit von 5 bis 27 N/mm² nach DIN 53 504 und eine Weiterreißfestigkeit von 3,5 bis 30 N/mm nach DIN 63 507 besitzen.

10. Verfahren nach Anspruch 1, dadurch gekennzeichnet, daß die Glasscheibe aus Silikatglas besteht.

## Claims

1. A process for surrounding glass sheet edges, coated with an adhesion promoter, with a reactive mixture for the formation of polyurethane, polyurethane-polyurea or polyurea elastomers in a mold, wherein the adhesion promoter used is a two-component system of one or more organic epoxy resins and one or more curing agents.

2. A process as claimed in claim 1, wherein the organic epoxy resin used is a compound having the structural formula

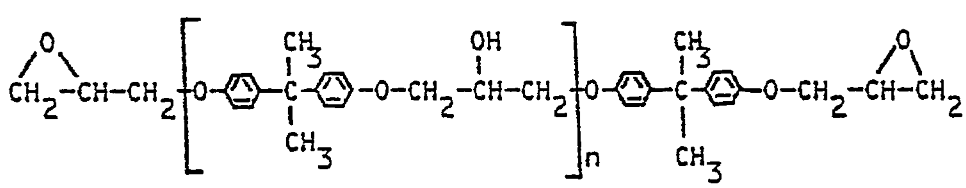

and an epoxide equivalent weight of from 140 to 4,000.

3. A process as claimed in claim 1, wherein the curing agents used are organic polyamines and/or polyamine adducts.

4. A process as claimed in claim 1, wherein the two-component system used as an adhesion promoter contains from 3 to 55 parts by weight of curing agent per 100 parts by weight of organic epoxy resin.

5. A process as claimed in claim 1, wherein the two-component system used as the adhesion promoter and consisting of organic epoxy resin and curing agent is used in the form of a solution in an organic solvent.

6. A process as claimed in claim 1, wherein the two-component system used as the adhesion promoter and consisting of organic epoxy resin and curing agent is applied to the glass sheet in a layer thickness of from 5 to 80 µm.

7. A process as claimed in claim 1, wherein

1. the glass sheet coated at the edge zone with the two-component adhesion promoter system is placed in the open mold,
2. the mold is closed,
3. the void formed between the glass sheet and the mold is charged with a reactive mixture of
    a) one or more organic polyisocyanates,
    b) one or more relatively high molecular weight compounds having two or more reactive hydrogen atoms,
    c) one or more chain extenders and/or crosslinking agents and
    d) one or more catalysts, with or without
    e) assistants and/or additives, and
4. the reaction mixture is allowed to cure.

8. A process as claimed in claim 1, wherein the reactive mixture for the formation of the polyurethane, polyurethane-polyurea or polyurea elastomers is injected into the void between the glass sheet coated at the edge zone with adhesion promoter and the mold by the reaction injection molding technique.

9. A process as claimed in claim 1, wherein the cured polyurethane, polyurethane-polyurea or polyurea elastomer has a density of from 0.8 to 1.4 g/cm$^3$, a hardness of from Shore A 40 to Shore D 60 according to DIN 53 505, a tensile strength of from 5 to 27 N/mm$^2$ according to DIN 53 504 and a tear propagation strength of from 3.5 to 30 N/mm according to DIN 63 507.

10. A process as claimed in claim 1, wherein the glass sheet consists of silicate glass.

## Revendications

1. Procédé pour gainer le bord de plaques de verre recouvertes d'adhésifs à l'aide de mélanges réactifs, en vue de former des élastomères de polyuréthanne, polyuréthanne-polyurée ou polyurée dans un dispositif de formage, caractérisé en ce que l'on utilise comme adhésifs un système à deux constituants comportant au moins une résine époxy organique et au moins un durcisseur.

2. Procédé selon la revendication 1, caractérisé en ce que l'on utilise comme résine époxy organique des composés de la formule de structure

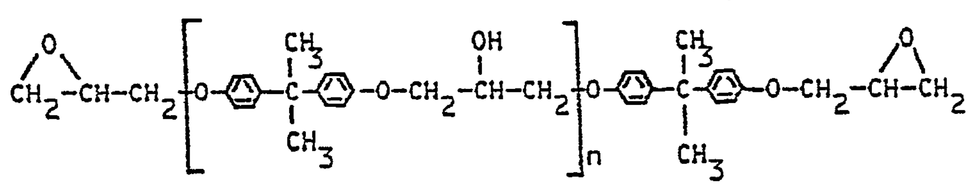

et d'un poids équivalent d'époxy de 140 à 4000.

3. Procédé selon la revendication 1, caractérisé en ce que l'on utilise comme durcisseur des polyamines organiques et/ou des produits d'addition de polyamines.

4. Procédé selon la revendication 1, caractérisé en ce que les systèmes à deux constituants utilisés comme adhésifs contiennent de 3 à 55 parties en poids de durcisseur par 100 parties en poids de résine organique époxy.

5. Procédé selon la revendication 1, caractérisé en ce que l'on utilise les systèmes à deux constituants employés comme adhésifs et provenant de résine époxy organique et de durcisseur sous forme de solutions dans des solvants organiques.

6. Procédé selon la revendication 1, caractérisé en ce que l'on applique les systèmes à deux constituants employés comme adhésifs et provenant de résine époxy organique et de durcisseur sur la plaque de verre en une épaisseur de revêtement de 5 à 80 µm.

7. Procédé selon la revendication 1, caractérisé en ce que

1. l'on dépose la plaque de verre recouverte dans la zone du bord du système adhésif à deux constituants dans le dispositif de moulage ouvert,
2. l'on verrouille le dispositif de moulage,
3. l'on remplit l'espace libre ainsi créé entre la plaque de verre et le dispositif de formage d'un mélange réactif comportant

a) au moins un polyisocyanate organique,
b) au moins un composé de poids moléculaire élevé portant au moins deux atomes d'hydrogène réactif,
c) au moins un agent d'allongement de chaîne et/ou de réticulation, et
d) au moins un catalyseur de même que, éventuellement,
e) des adjuvants et/ou additifs et

4. on laisse durcir le mélange réactif.

8. Procédé selon la revendication 1, caractérisé en ce qu'on injecte le mélange réactif destiné à former l'élastomère de polyuréthanne, polyuréthanne-polyurée ou polyurée dans l'espace libre subsistant entre la plaque de verre recouverte d'adhésif dans la zone du bord et le dispositif de formage, selon la technique de moulage réactif par injection.

9. Procédé selon la revendication 1, caractérisé en ce que les élastomères durcis de polyuréthanne, polyuréthanne-polyurée ou polyurée possèdent un poids spécifique de 0,8 à 1,4 g/cm$^3$, une dureté Shore A 40 à Shore D 60 selon la norme DIN 53 505, une résistance à la traction de 5 à 27 N/mm$^2$ selon la norme DIN 53 504 et une résistance à la déchirure amorcée de 3,5 à 30 N/mm selon la norme DIN 63 507.

10. Procédé selon la revendication 1, caractérisé en ce que la plaque de verre est constituée de verre au silicate.